Europäisches Patentamt

European Patent Office

Office européen des brevets

(11) Publication number: **0 196 068**
**A2**

(12) **EUROPEAN PATENT APPLICATION**

(21) Application number: **86104095.4**

(22) Date of filing: **25.03.86**

(51) Int. Cl.⁴: **G 05 D 23/19**

(30) Priority: **29.03.85 US 717994**

(43) Date of publication of application: **01.10.86**
**Bulletin 86/40**

(84) Designated Contracting States: **BE CH DE FR GB IT LI NL SE**

(71) Applicant: **HONEYWELL INC., Honeywell Plaza, Minneapolis Minnesota 55408 (US)**

(72) Inventor: **Beckey, Thomas J., 4903 Arden Avenue South, Edina Minnesota 55424 (US)**

(74) Representative: **Herzbach, Dieter et al, Honeywell Europe S.A. Holding KG Patent- und Lizenzabteilung Kaiserleistrasse 55 Postfach 184, D-6050 Offenbach am Main (DE)**

(54) **Temperature control system.**

(57) A heat pump (11) and auxiliary heat (12) arrangement is disclosed for control of the environment in a closed space (17). A real time clock operated thermostat means (21) operates the heat pumpe and auxiliary heat. An actual temperature in the space and the slope of a defined curve establishes a correct starting point for the system so that a setback can be reversed with the temperature coming out at the desired temperature at a correct time. The present system uses no outside temperature sensor.

HONEYWELL INC.

Honeywell Plaza

Minneapolis, MN 55408 USA

March 24, 1986

R1111223 EP

Hz/ep

## TEMPERATURE CONTROL SYSTEM

The present invention relates to a temperature control system according to the preamble of claim 1.

The optimum control of heating and cooling of enclosed spaces, such as residential structures, has become a highly developed art. This art has been refined by the control of the temperature in such structures by the means of real time clock operated thermostats that utilize microcomputers or microprocessors that have extensive memories. With the use of microcomputers and memories, it is possible to build a thermostat that is capable of accurate control and one that is capable of generating substantial energy savings. The energy savings are accomplished in a heating mode by the thermostat setting back the building temperature at night or when the building is not occupied, and then returning the temperature control to a normal temperature at a preselected time. Energy can also be saved in a cooling mode by setting the building temperature up during an unoccupied time, and then returning the temperature setting to a lower temperature for normal occupation of the building.

These changes save energy by lowering the need for energy consumption when a building is not occupied, or when the occupants can tolerate the variation from a normal temperature. These functions have been long recognized and utilized with various types of clock-operated thermostats. The technology has progressed to the point where prior temperature cycles for the building are stored in the microcomputer's memory for use in controlling the future temperature cycles within the building. This type of control, while being generally energy efficient, has a serious flaw when the heating and/or cooling source is a heat pump that utilizes auxiliary heat. Typically, a heat pump will have a very high cost efficiency, and the auxiliary electric heat will have a relatively poor cost efficiency. In present day equipment that use setback for energy savings with heat pumps, the heat pump and electric energy normally both come on during the pickup cycle. This may be inefficient from an energy standpoint as the heat pump alone might be capable of bringing the building back to a normal temperature in a reasonable period of time without the use of auxiliary heat. This function has been recognized, and outdoor sensors are sometimes incorporated in these systems. When an outdoor sensor is used it must arbitrarily be set at some outdoor temperature value, and may cause a less than efficient use of the electric heat. In order to obtain maximum house shell and system savings efficiency, a heat pump with auxiliary heat must be operated with a judicious use of the auxiliary heat.

It is therefore the object of the present invention to devise a temperature control system which can be operated with a judicious use of the auxiliary heat. This object is achieved according to the characterizing features of claim 1. Further advantageous embodiments of the system may be taken from the sub-claims.

The present invention is directed to a temperature control system for a multiplant environmental unit wherein a microcomputer or microprocessor based thermostat is utilized. The invention has particular utility with heat pumps that are operated in conjunction with electric heat. The electric heat typically provides a very high cost penalty in its use over the heat pump itself.

In the present invention the thermostat means records the slope of a curve of sensor temperature generated in a pickup cycle from a previous day. This slope is then used to optimize the operation of the system in a manner that can effectively lock the electric heat out in a large number of cases. The system is started at the right time to reach a new setpoint temperature at a desired time. Ordinarily, a thermostat means for control of a heat pump with electric heat allows for the electric heat to come on at the same time as the heat pump to restore a normal setpoint temperature. This may be poor from an energy savings standpoint. If the system has an outside sensor that may help the situation, or may hinder the situation, depending on the matching of the outdoor temperature setting with the actual conditions.

In the present invention the thermostat means itself adjusts in such a manner as to lock the electric heat off when it is not necessary for proper control. This is accomplished by ramping the setpoint temperature of the thermostat up at some predetermined rate starting a small time after the setback is terminated.

The present system can be modified by programming the thermostat so that a delay is introduced in the ramping of the setpoint temperature to allow for the thermal inertia of the heat pump and the distribution network. The distribution network normally includes a fan and duct work. The present thermostat means can further be modified by the addition of a slight variation in temperature from the setpoint, which will be referred to as a heat tolerance or a cool tolerance. This slight variation from the setpoint eliminates overshoot that would be otherwise present.

Under reference to the attached drawings an embodiment of the inventive system and its operation shall be described in detail, where:

Figure 1 is a block diagram of a building, an environmental unit for control, and the distribution network;

Figure 2 is a graph of time versus temperature of a temperature cycle for the building;

Figure 3 is a time and temperature graph of a mild day subsequent to Figure 2;

Figure 4 is a time versus temperature graph of a colder day subsequent to Figure 3;

Figure 5 is a time versus temperature graph of a colder day than disclosed in Figure 4;

Figure 6 discloses a time versus temperature graph of a very much colder day than that disclosed in Figure 5, and;

Figure 7 is a flow chart of the operation of the system.

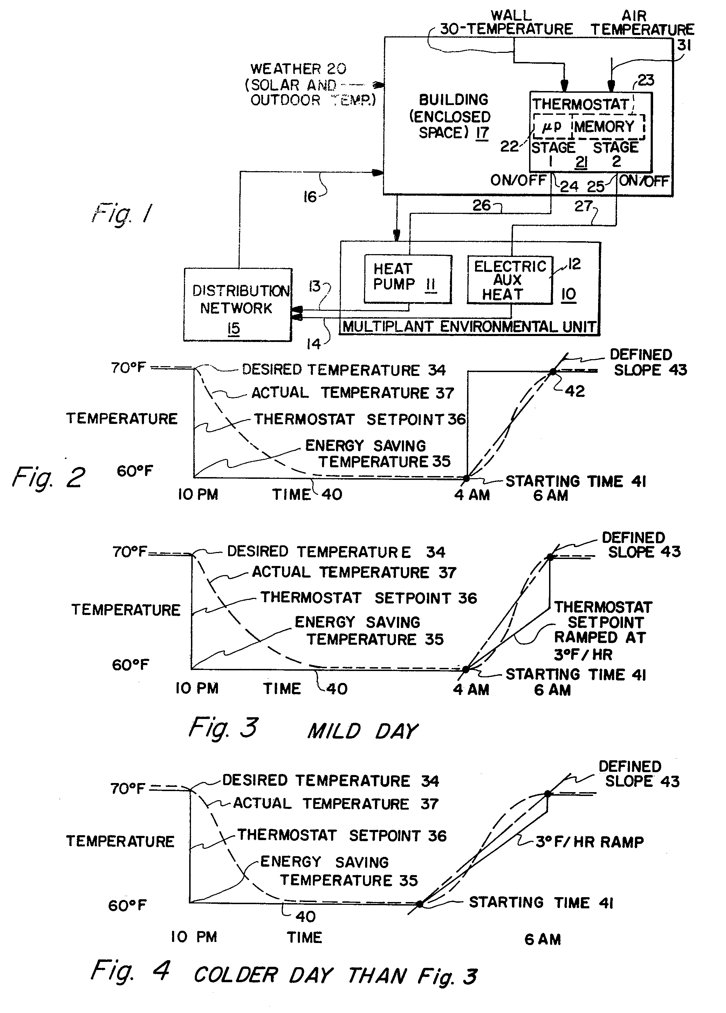

In Figure 1 a multiplant environmental unit 10 is disclosed made up of a heat pump 11 and electric auxiliary heat 12. The heat pump 11 and auxiliary electric heat 12 provide heat (and cooling on the reverse cycle) via channels 13 and 14 to a distribution network 15. The distribution network 15 includes such equipment as a blower and duct work, and provides heating and/or cooling through a channel 16 to a building or enclosed space 17. The building or enclosed space 17 typically would be a residential structure, and would be affected by weather 20. Weather 20 includes such things as solar radiation, winds, and outdoor temperature.

Within the building or enclosed space 17 is a real time clock operated thermostat means 21 that includes a microprocessor or microcomputer 22 and a memory 23. The thermostat means 21 also would include a clock means, which normally is part of the microprocessor or microcomputer 22. The thermostat means 21 is indicated as having at least two stages 24 and 25 that are capable of providing switched, on-off control signals to conductors 26 and 27 that are used in turn to control the heat pump 11 and the auxiliary electric heat 12. The thermostat means 21 is normally affected by the wall temperature 30 and the air temperature 31 of the building or enclosed space 17. To this point, a conventional heat pump and auxiliary heat arrangement for a building or residence has been described. The function of Figure 1 is adapted to the present invention in a manner that will be disclosed subsequently. Before discussion of the operation of the block diagram of Figure 1, a discussion of an operating cycle in connection with a time and temperature curve of Figure 2 is believed warranted.

In Figure 2, a time and temperature curve for a typical night setback operation of a clock operated thermostat means is disclosed. It should be understood that while an example of a night setback is specifically explained in the present disclosure, the principles involved in the present invention can be used for day setback of a heating system, or day or night setup of an air conditioning system. The night setback description is the most easily understood, and therefore is the one used by way of example in the present disclosure.

A desired temperature 34 is disclosed as being 70 degrees Fahrenheit. The desired temperature is set down at 10 p.m. to an energy savings temperature 35 of 60 degrees Fahrenheit. The thermostat setpoint 36 is disclosed as going from the desired temperature 34 to the energy saving temperature 35. The actual temperature in the building or enclosed space 17 is shown at 37, and it trails off from the 70 degree Fahrenheit setting due to the thermal losses of the building or enclosed space 17. At time 40 the actual temperature 37 and the energy saving temperature 35 are effectively the same. While the actual temperature 37 has been shown as a constant beginning at time 40, in reality the temperature cycles over a small range to maintain the energy saving temperature 35 at 60 degrees Fahrenheit.

At 4 a.m., a starting time 41 is programmed into the thermostat means 21 to cause the thermostat setpoint 36 to rise to 70 degrees Fahrenheit. The starting time of 4 a.m. has been selected in prior art devices by one of two means. The first is merely an arbitrary selection of a starting time 41. The other is by sampling the rate that the actual temperature 37 has been declining, and using that information to estimate when the starting time 41 must be initiated to reach the desired temperature 34 at 6 a.m. which has been selected as the desirable time for the night setback to end. The actual temperature 37 rises from the energy saving temperature 35, at the starting time 41, through an S-shaped curve to reach the desired temperature 34 at 6 a.m.

The starting time 41 can be selected arbitrarily, or by sampling the actual temperature 37, and establishes a defined slope 43 of a curve that passes through the starting time 41 and the point 42 which coincides with the desired temperature 34 and the time of 6 a.m. The defined slope 43 always passes through the desired starting time 41 and the time 42 at which the desired temperature 34 should be present. In systems that utilize a single plant heating arrangement, the arrangement just described performs satisfactorily. Where the heating system is a multiplant environmental unit that includes a heat pump and auxiliary electric heat, a very inefficient operation occurs.

The inefficiency occurs if a step change, for instance, occurs at 4 a.m. from the starting time 41 at 60 degrees Fahrenheit to the desired temperature 34 of 70 degrees Fahrenheit. This step change causes a heat pump and auxiliary heat to go into full operation utilizing the highly efficient heat pump, and also bringing on the very inefficient electric heat. By inefficient it is meant that the amount of heat generated for unit cost is very high compared to the same amount of energy used in a heat pump. This system therefore partially defeats the energy savings characteristics of a night setback arrangement by having the auxiliary heat on, when it may not be necessary. If for example a system is operating in a very mild climate condition, the heat pump alone might be satisfactory to raise the temperature in the desired time. In that case the addition of the electric heat brings the temperature up more rapidly than is necessary, and utilizes a very expensive heating mode. It is desirable in a heat pump and auxiliary heat arrangement to keep the electric auxiliary heat in an "off" condition under certain operating conditions.

The curve of Figure 2 establishes a foundation for the present invention. It will be noted that the defined slope 43 passes through the starting time 41 and the desired temperature 34 at the time of 6 a.m., which is assumed to be the time that it is desired to have the temperature back up to the level of 70 degrees Fahrenheit. The defined slope 43 always approximates the S-shaped actual temperature curve. The defined slope 43 therefore can be readily moved with respect to time, and as long as it passes through the desired temperature at the time that the desired temperature is required, the curve or defined slope 43 defines the proper starting time for the system and can change day to day. It should also be noted that the defined slope 43 from each day will be a good approximation of the requirement for the subsequent day. Extensive research into weather data shows that the weather changes slowly enough so that a curve established on one day normally will be approximately correct for the next day. A few days during a heating or cooling season will shift more than this and it will not be true, but those few days can be economically disregarded. As such, each days defined slope 43 is stored in the memory of the microprocessor or microcomputer in the thermostat 21, and is used on the next comparable cycle. The slope is then redefined and stored for use in the subsequent day. Since the defined slope 43 satisfactorily approximates the S-shaped curve, a very simple expedient has been provided that allows for determining the correct starting time 41 regardless of the outdoor temperature and conditions. This then is utilized in a system that ensures that the auxiliary electric heat 12 is kept off if the heat pump 11 alone can satisfy the heating needs of the building or enclosed space 17.

In Figure 3, a day that is quite mild is disclosed and is a day following the day of Figure 2. The defined slope 43 has been stored in the thermostat means memory 23 and is used to establish the starting time 41, as was accomplished in the system described in connection with Figure 2. In the present invention, the thermostat setpoint 36 is operated in a different manner than any of the systems previously used. At the starting time 41, again assumed to be 4 a.m., the thermostat means 21 (through the microprocessor or microcomputer 22 and the memory 23) initiate a morning pickup cycle. In this case, however, the thermostat setpoint 36 is ramped at a three degree Fahrenheit per hour rate. This rate has been found to be successful for optimum shell and system savings, and could be varied depending on the design of the thermostat and the circumstances in which it is to be installed. For the purposes of the present explanation the three degree Fahrenheit per hour ramp rate will be used.

At the starting time 41, the heat pump 11 is brought "on" and is locked in a full "on" state by the microcomputer 22. The thermostat setpoint 36 is ramped up at the three degree Fahrenheit per hour rate. Since the ramped rate of the setpoint is approximately the same as the actual temperature rise in the building or enclosed space 17, the difference between the setpoint 36 and the actual temperature 37 is small enough so that the auxiliary electric heat 12 is not brought into play by the second stage of the thermostat means 21. The offset between the first and second stages of the thermostat means 21 allows for this type of operation, and this is well understood in the thermostat art. In the disclosure of Figure 3, the actual temperature 37 rises above the setpoint temperature after a period of time and at no time does the electric auxiliary heat 12 come into operation. At the normal pickup time of 6 a.m., the thermostat means (through the microcomputer 22 and the memory 23) resets the setpoint temperature up to the desired temperature of 70 degrees Fahrenheit in a step. Since the actual temperature has already risen to approximately the desired level of 70 degrees, the electric auxiliary heat 12 never comes on.

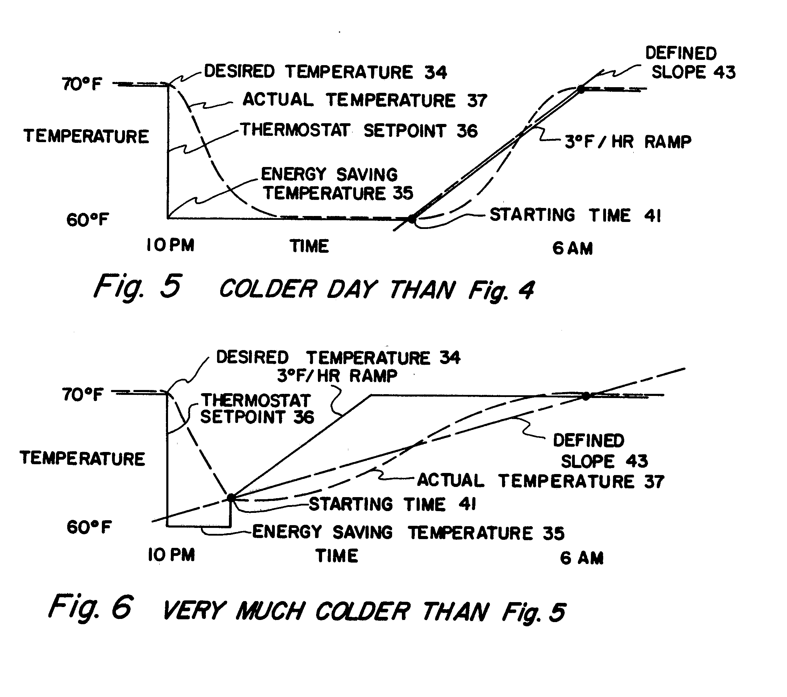

In Figure 4 a cooler day than that disclosed in Figure 3 is disclosed. This has come about through a slow change in the daily cycle of the heating of the building, and the defined slope 43 has become shallower, thereby moving the starting time 41 to an earlier time than had been disclosed in Figure 3. As soon as the actual temperature 37 intersects the defined slope 43, a starting time 41 for the system is initiated. Once again the thermostat setpoint 36 is ramped up at a three degree Fahrenheit per hour rate. It will be noted that in Figure 4 this ramped rate begins to approximate the defined slope 43. Once again the actual temperature 37 and the thermostat setpoint 36 (ramped at three degrees Fahrenheit per hour) remain very close to one another. In this case the auxiliary electric heat might be brought on for some short period of time in the early part of the cycle, but as the actual temperature 37 approached or crossed the setpoint temperature 36, the electric heat would be "off" and the balance of the morning setup would be accomplished by the heat pump alone.

In Figure 5 a colder day than in Figure 4 is disclosed. In this case the weather has cooled and the defined slope 43 has been shown as providing a starting time that is three and one third hours before the 6 a.m. setback point. In this case the setback slope, while being ramped up at three degrees Fahrenheit per hour corresponds with the defined slope 41, and establishes the starting time as being three and one third hours before the 6 a.m. time when the desired 70 degree temperature was required.

In Figure 6 a very much colder day than Figure 5 is disclosed. This curve brings out a feature not previously discussed. Based on the history of the previous setback cycles, a defined slope 41 that is very shallow is provided. If the desired time of 6 a.m. for a 70 degree Fahrenheit is again required in the building or enclosed space 17, the starting time 41 is established by an intersection of the defined slope 43 and the actual temperature 37. The start time 41 in this case does not occur at a temperature of 60 degrees Fahrenheit, but occurs at a temperature of approximately 62 degrees Fahrenheit. The defined slope 41 never does intersect the 60 degree Fahrenheit line during the entire setback operation. The starting time 41 is dictated by the intersection of the actual temperature 37 and the defined slope 43. The thermostat setpoint 36 is changed and then ramped up at a three degrees Fahrenheit per hour starting from the start time 41. In this way the temperature of the house or building 17 can be brought up to the desired temperature of 70 degrees by 6 a.m. If the start up time had not occurred at approximately 62 degrees Fahrenheit, it is possible that the building or enclosed space 17 would not reach the 70 degree temperature until some time substantially after the 6 a.m. time, which is undesirable. In the case where the intersection of the actual temperature 37 does not intersect the setback temperature of 60 degrees, but intersects the defined slope 43 above the 60 degree Fahrenheit level, the setpoint 36 is set up to the intersection of the actual temperature 37 and the defined slope 43.

In reality, a time delay is introduced in this system that has not yet been discussed. It is well understood that a heat pump takes a period of time to efficiently generate a useful heat flow. Also, the distribution network 15 would have some form of thermal lag. In order to adjust for the lag of the heat pump 11 and of the distribution network 15, a time delay can be inserted in the system at the starting time 41 before the thermostat setpoint 36 is raised in either a ramped fashion as disclosed in Figures 3 through 5, or stepped and then ramped as disclosed in Figure 6. This delay allows for the heat pump and the rest of the system to come up to temperature to stablize. This can reduce the amount of auxiliary electric heat that would be otherwise required if the system were started without the delay. Also, another feature that has not been discussed is the fact that a small degree of heating or cooling tolerance, in the order of 0.6 degrees Fahrenheit, is inserted in the actual setpoint temperature. This heat or cool tolerance allows for the heat pump to be turned off a short period before the actual temperature is reached in order to avoid an overshoot of the actual temperature against the desired temperature.

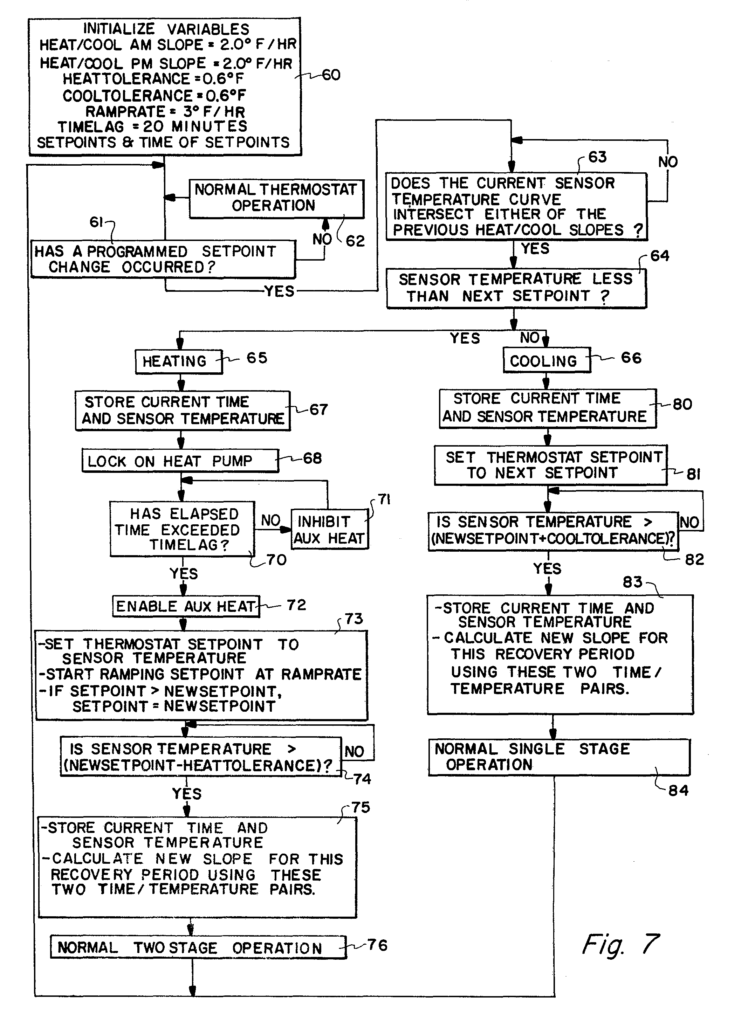

In Figure 7 a complete flow chart for the operation of the system utilizing some suggested parameters is provided. The system is for a heat pump and auxiliary heat with a two stage thermostat means 21. At 60, the variables are initialized with a heat/cool slope for both morning and evening (assuming two setback cycles per day) of two degrees Fahrenheit per hour. Both the heating and cooling have 0.6 degrees Fahrenheit set in as a tolerance, as was explained previously. A ramp rate is selected of three degrees Fahrenheit per hour, and a time lag of 20 minutes for a typical heat pump system. The final part of the initialization 60 is establishing the setpoint temperatures and the times at which the setpoint temperatures are to be executed.

The flow chart then goes on at 61 to determine whether a programmed setpoint change has occurred. If the setpoint has not changed at 62, the thermostat goes into a normal operation looking for a setpoint change. If a setpoint change does occur, at 63 the system determines whether the current sensor temperature curve intersected either the previous heat or cool defined slopes. If not, the system keeps looking for that condition. If it does, the system progresses at 64 to determine whether the sensor temperature is less then the next setpoint temperature. If it is, a heating cycle 65 is initiated. If it is not, a cooling cycle 66 is initiated. The present discussion will follow through the heating cycle 65 first.

After the heating cycle 65 has been selected, the system stores the current time and sensor temperature 67, and the heat pump 11 is locked into operation at 68. The time lag 70 is then inserted and the auxiliary heat is inhibited at 71. After the time lag 70 has expired, the auxiliary heat is inabled at 72.

At 73, the setpoint for the thermostat is set to the sensor temperature, a ramping of the setpoint is begun at the selected ramp rate. If the setpoint is greater than the new setpoint, the setpoint is made equal to the new setpoint. This allows for the extremely cold condition as described in Figure 6.

The system then determines at 74 if the new sensor temperature is greater than the new setpoint less the heat tolerance temperature. If it is, the system continues. The system then stores the current time and sensor temperature at 75, and calculates a new slope for this recovery period using these two time and temperature pairs. This establishes the defined slope 41 for the next cycle. The system at 76 then goes into normal two stage operation and the loop is closed back to look for a change in the setpoint.

The completed flow chart of the heating cycle allows for utilization of the present invention by a two stage thermostat means 21 having a microcomputer or microprocessor 22 and the memory 23. This is accomplished by the use of all of the elements previously discussed. In the cooling mode, the operation of the flow chart is very similar. However, since the cooling function does not include an auxiliary heat function, the flow chart for operation can be reduced in complexity. After cooling has been established at 66, the time and sensor temperature at 80 is stored. The thermostat setpoint is set to the next setpoint at 81. A determination is then made at 82 as to whether the sensor temperature is greater than the new setpoint plus a cool tolerance temperature. If it is not, the system waits until that occurs. If it is, the system moves on at 83 to store the current time and sensor temperature, and calculates a new slope for the defined slope 41 of this recovery period using these two time and temperature pairs. The system goes into a normal single stage operation of cooling at 84 and goes back into the beginning of the flow chart routine.

With the present invention a heat pump and auxiliary heat can be operated in a more efficient manner when night setback is used with the equipment. The present invention is directed to a thermostat means that has a microcomputer or microprocessor, a clock that is normally found with such equipment, and a memory. By storing data on a previous heating cycle, it is possible to establish a defined slope of a curve which, when it intersects the actual sensor temperature, will start the system so that a recovery function will bring the setpoint temperature to the desired temperature at a correct time. The present disclosure has been made in detail in connection with a heat pump and a single additional stage to control auxiliary electric heat. Also disclosed are further multiple stages. The disclosure has been also applied to a cooling function. The present invention is capable of operating any type of multiplant environmental unit that has at least two stages, and where it is desirable that one stage operate in preference to the other stages where possible. Since the present invention can be incorporated in a microcomputer based control device in many different fashions, the applicant wishes to be limited in the scope of his invention solely by the scope of the appended claims.

Claims:

1. A temperature control system for control of a multiplant environmental unit (10) for tempering the atmosphere in an enclosed space (17) in an optimum manner, c h a r a c - t e r i z e d b y :

real time clock operated thermostat means (21) located in said space (17) with said thermostat means (21) providing for at least a previous temperature control cycle of said multiplant environmental unit in a predetermined time interval;

said thermostat means (21) having a desired setpoint temperature (34) and further having an energy savings setpoint temperature (35) to define the limits of the operation of said multiplant environmental unit (10) over said temperature control cycle;

said thermostat means (21) including microcomputer means (22) having memory means (23);

said memory means (23) storing a slope of a curve created using a desired setpoint temperature starting time and temperature, and which allows said atmosphere to change from said energy savings setpoint temperature to said desired setpoint temperature at said starting time during said previous temperature control cycle;

said multiplant environmental unit (10) having at least a first (11) and a second (12) level of energy outputs;

said first level (11) of energy output may be more cost effective than said second level (12) of energy output;

said thermostat means (21) initiating the operation of said multiplant environmental unit in a following temperature control cycle at a time when said curve intersects an actual temperature measurement in said enclosed space;

said thermostat means ramping a setpoint temperature from said energy saving setpoint temperature towards said desired setpoint temperature at a predetermined rate while continuously energizing said multiplant environmental unit at said first level of energy output; and

said thermostat means causing said second level (12) of energy output to be energized if said actual temperature measurement deviates from said ramped setpoint temperature by a determined amount.

2. A temperature control system according to claim 1, c h a r a c t e r i z e d   i n   t h a t   said first level of energy output from said multiplant environmental unit is provided by a heat pump (11); and said second level of energy output is provided by one or more stages of electric heat (12).

3. A temperature control system according to claim 1, c h a r a c t e r i z e d   i n   t h a t   said thermostat means (21) includes time delay means (60); said time delay means being activated before said thermostat means ramps said setpoint temperature toward said desired setpoint temperature to allow said system to stabilize.

4. A temperature control system according to claim 3, c h a r a c t e r i z e d   i n   t h a t   said thermostat means (21) is a heating and cooling thermostat with at least two stages (24, 25) of heating control.

5. A temperature control system according to claim 1, c h a r a c t e r i z e d   i n   t h a t   said thermostat means (21) includes tolerance offset means (60); said tolerance offset means adjusting said setpoint temperature to prevent overshoot in operation of said system.

6. A temperature control system according to claim 5, c h a r a c t e r i z e d   i n   t h a t   said thermostat means (21) includes time delay means (60); said time delay means being activated before said thermostat means ramps said setpoint temperature toward said desired setpoint temperature to allow said system to stabilize.

7. A temperature control system according to claim 6, c h a r a c t e r i z e d   i n   t h a t   said thermostat means (21) is a heating and cooling thermostat with at least two stages (24, 25) of heating control.

1/3

0 196 068

Fig. 1

Fig. 2

Fig. 3    MILD DAY

Fig. 4   COLDER DAY THAN Fig. 3

Fig. 5    COLDER DAY THAN Fig. 4

- DESIRED TEMPERATURE 34
- ACTUAL TEMPERATURE 37
- THERMOSTAT SETPOINT 36
- ENERGY SAVING TEMPERATURE 35
- DEFINED SLOPE 43
- 3°F / HR RAMP
- STARTING TIME 41

70°F
60°F
TEMPERATURE
10 PM    TIME    6 AM

Fig. 6    VERY MUCH COLDER THAN Fig. 5

- DESIRED TEMPERATURE 34
- 3°F/HR RAMP
- THERMOSTAT SETPOINT 36
- DEFINED SLOPE 43
- ACTUAL TEMPERATURE 37
- STARTING TIME 41
- ENERGY SAVING TEMPERATURE 35

70°F
60°F
TEMPERATURE
10 PM    TIME    6 AM

2/3

0 196 068

INITIALIZE VARIABLES
HEAT/COOL AM SLOPE = 2.0° F / HR
HEAT/COOL PM SLOPE = 2.0° F/HR
HEATTOLERANCE = 0.6°F
COOLTOLERANCE = 0.6°F
RAMPRATE = 3° F / HR
TIMELAG = 20 MINUTES
SETPOINTS & TIME OF SETPOINTS — 60

NORMAL THERMOSTAT OPERATION — 62

61 — HAS A PROGRAMMED SETPOINT CHANGE OCCURRED? — NO

YES

DOES THE CURRENT SENSOR TEMPERATURE CURVE INTERSECT EITHER OF THE PREVIOUS HEAT/COOL SLOPES? — 63 NO

YES

SENSOR TEMPERATURE LESS THAN NEXT SETPOINT? — 64

YES / NO

HEATING — 65

COOLING — 66

STORE CURRENT TIME AND SENSOR TEMPERATURE — 67

STORE CURRENT TIME AND SENSOR TEMPERATURE — 80

LOCK ON HEAT PUMP — 68

SET THERMOSTAT SETPOINT TO NEXT SETPOINT — 81

HAS ELAPSED TIME EXCEEDED TIMELAG? — 70   NO   INHIBIT AUX HEAT — 71

IS SENSOR TEMPERATURE > (NEWSETPOINT+COOLTOLERANCE)? — 82 NO

YES

YES

ENABLE AUX HEAT — 72

-STORE CURRENT TIME AND SENSOR TEMPERATURE
- CALCULATE NEW SLOPE FOR THIS RECOVERY PERIOD USING THESE TWO TIME/ TEMPERATURE PAIRS. — 83

-SET THERMOSTAT SETPOINT TO SENSOR TEMPERATURE
-START RAMPING SETPOINT AT RAMPRATE
-IF SETPOINT > NEWSETPOINT, SETPOINT = NEWSETPOINT — 73

IS SENSOR TEMPERATURE > (NEWSETPOINT-HEATTOLERANCE)? — 74   NO

NORMAL SINGLE STAGE OPERATION — 84

YES

-STORE CURRENT TIME AND SENSOR TEMPERATURE
-CALCULATE NEW SLOPE FOR THIS RECOVERY PERIOD USING THESE TWO TIME/TEMPERATURE PAIRS. — 75

NORMAL TWO STAGE OPERATION — 76

Fig. 7